# EUROPEAN PATENT APPLICATION

(11) **EP 4 613 828 A1**
(43) Date of publication of application: **10.09.2025**
(21) Application number: 24184635.1
(22) Date of filing: 26.06.2024
(51) Int. Cl.: C10G 11/05, B01J 29/08

(54) **A PROCESS FOR PREPARING BOTTOMS CRACKING CATALYST FOR FLUID CATALYTIC CRACKING UNIT**

(30) Priority: 07.03.2024 IN 202441016305
(71) Applicant: Hindustan Petroleum Corporation Limited, Bengaluru 560067 (IN)
(72) Inventor: KANNA, Narasimharao, 560067 Bengaluru (IN); KUKADE, Narasimharao, 560067 Bengaluru (IN); KUMAR, Pramod, 560067 Bengaluru (IN)
(74) Representative: Turner, Craig Robert

(57) **Abstract**

The present disclosure generally relates to the processing of petroleum-based materials. The present invention disclosure specifically relates to a process for preparing bottoms cracking catalyst for fluid catalytic cracking unit, wherein the process comprises treating Y zeolite with an organic acid, followed by treating with an alkali to obtain Meso Y zeolite; preparing an aqueous solution of pseudoboehmite alumina and phosphororic acid and mixing with Meso Y zeolite to obtain a solution A; mixing a dispersion of colloidal silica and aqueous solution of boric acid to obtain a solution B; mixing the solution A and the solution B to obtain the bottom cracking catalyst.

## Description

### TECHNICAL FIELD:

The present disclosure generally relates to the processing of petroleum-based materials. Specifically, the present disclosure relates to a process for preparing bottoms cracking catalyst for fluid catalytic cracking unit.

### BACKGROUND:

Fluid Catalytic Cracking (FCC) units play an important role for converting heavy hydrocarbons to light hydrocarbons. In the presence of an FCC catalyst heavy hydrocarbons are subjected to cracking in the FCC unit.

Heavy fuel oil in bottoms have both normal paraffins (C14-C34) having a molecular size in the range of 12 to 20 Å and heavy aromatic molecules (C14-C60) having a molecular size in the range of 12 to 25Å, however the zeolite present in the FCC additives has a pore size below 7.5 Å. Therefore, the hydrocarbons present in the heavy fuel oil are too large to fit into the zeolite pores for cracking. Due to which, the large hydrocarbon molecules are first cracked on surface of FCC catalyst matrix to produce smaller hydrocarbons, that in turn cracked inside zeolite pores. The overall process leads to the over-cracking of the hydrocarbons, resulting in the formation of coke and dry gases.

To overcome the mass transfer limitation of micropore zeolite, a mesoporous zeolite is prepared and utilized for bottoms cracking.

In this invention, acidity of the alumina is also enhanced by peptizing with phosphoric acid. Eventually a combination of Meso zeolite and Acidity enhanced alumina with alumina or silica binder enhances the bottoms conversion.

### SUMMARY:

The present disclosure relates to a process for preparing bottoms cracking catalyst for fluid catalytic cracking unit, wherein the process comprising: treating Y zeolite with an organic acid, followed by treating with an alkali to obtain Meso Y zeolite; preparing an aqueous solution of pseudoboehmite alumina and phosphororic acid and mixing with Meso Y zeolite to obtain a solution A; mixing a dispersion of colloidal silica and aqueous solution of boric acid to obtain a solution B; mixing the solution A and the solution B to obtain the bottom cracking catalyst.

### DETAILED DESCRIPTION:

For the purpose of promoting an understanding of the principles of the disclosure, reference will now be made to the embodiment illustrated in the drawings and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as would normally occur to one skilled in the art to which the disclosure relates. Unless otherwise defined, all technical and scientific terms used herein have the same meaning as commonly understood by one of ordinary skilled in the art to which this disclosure belongs. The system, methods, and examples provided herein are illustrative only and not intended to be limiting.

Although any methods and materials similar or equivalent to those described herein can also be used in the practice or testing of the present disclosure, the preferred methods and materials are now described. All publications mentioned herein are incorporated herein by reference to disclose and describe the methods and/or materials in connection with which the publications are cited.

It must be noted that as used herein and in the appended claims, the singular forms "a", "and", and "the" include plural referents unless the context dictates otherwise. Thus, for example, reference to "a compound" includes a plurality of such compounds, and reference to "the step" includes reference to one or more steps and equivalents thereof known to those skilled in the art, and so forth.

The term "some" as used herein is defined as "none, or one, or more than one, or all." Accordingly, the terms "none," "one," "more than one," "more than one, but not all" or "all" would all fall under the definition of "some." The term "some embodiments" may refer to no embodiments or to one embodiment or to several embodiments or to all embodiments. Accordingly, the term "some embodiments" is defined as meaning "no embodiment, or one embodiment, or more than one embodiment, or all embodiments."

The terminology and structure employed herein is for describing, teaching and illuminating some embodiments and their specific features and elements and does not limit, restrict or reduce the spirit and scope of the claims or their equivalents.

More specifically, any terms used herein such as but not limited to "includes", "comprises", "has", "consists" and grammatical variants thereof is inclusive or open-ended and does not exclude additional, unrecited elements or method steps. The specification will be understood to also include embodiments which have the transitional phrase "consisting of" or "consisting essentially of" in place of the transitional phrase "comprising." The transitional phrase "consisting of" excludes any element, step, or ingredient not specified in the claim, except for impurities associated therewith. The transitional phrase "consisting essentially of" limits the scope of a claim to the specified materials or steps "and those that do not materially affect the basic and novel characteristic(s)" of the claimed disclosure.

Whether or not a certain feature or element was limited to being used only once, either way it may still be referred to as "one or more features" or "one or more elements" or "at least one feature" or "at least one element." Furthermore, the use of the terms "one or more" or "at least one" feature or element do NOT preclude there being none of that feature or element, unless otherwise specified by limiting language such as "there NEEDS to be one or more. " or "one or more element is REQUIRED."

As used herein, the term "about" is used to indicate a degree of variation or tolerance in a numerical or quantitative value. It indicates that the disclosed value is not intended to be strictly limiting, and may vary by plus or minus 5%, without departing from the scope of the invention. Unless otherwise defined, all terms, and especially any technical and/or scientific terms, used herein may be taken to have the same meaning as commonly understood by one having an ordinary skill in the art.

Reference is made herein to some "embodiments." It should be understood that an embodiment is an example of a possible implementation of any features and/or elements presented in the attached claims. Some embodiments have been described for the purpose of illuminating one or more of the potential ways in which the specific features and/or elements of the attached claims fulfil the requirements of uniqueness, utility and non-obviousness.

Use of the phrases and/or terms such as but not limited to "a first embodiment," "a further embodiment," "an alternate embodiment," "one embodiment," "an embodiment," "multiple embodiments," "some embodiments," "other embodiments," "further embodiment", "furthermore embodiment", "additional embodiment" or variants thereof do NOT necessarily refer to the same embodiments. Unless otherwise specified, one or more particular features and/or elements described in connection with one or more embodiments may be found in one embodiment, or may be found in more than one embodiment, or may be found in all embodiments, or may be found in no embodiments. Although one or more features and/or elements may be described herein in the context of only a single embodiment, or alternatively in the context of more than one embodiment, or further alternatively in the context of all embodiments, the features and/or elements may instead be provided separately or in any appropriate combination or not at all. Conversely, any features and/or elements described in the context of separate embodiments may alternatively be realized as existing together in the context of a single embodiment.

As referred herein, the term "Fluid Catalytic Cracking" refers to the conversion process used in petroleum refineries to convert the high-boiling point, high-molecular weight hydrocarbon fractions of petroleum (crude oils) into gasoline, alkene gases, and other petroleum products.

As used herein the terms "method" and "process" have been used interchangeably.

The present disclosure discloses a process for preparing bottoms cracking catalyst for fluid catalytic cracking unit.

In some embodiments, the process comprises the steps:
treating Y zeolite with an organic acid, followed by treating with an alkali to obtain Meso Y zeolite;
preparing an aqueous solution of pseudoboehmite alumina and phosphororic acid and mixing with Meso Y zeolite to obtain a solution A;
mixing a dispersion of colloidal silica and aqueous solution of boric acid to obtain a solution B;
mixing the solution A and the solution B to obtain the bottom cracking catalyst.

The Y zeolite comprises SiO₂/Al₂O₃ in ratio in a range of 4.5 and 5.5, preferably the ratio is 5.1.

The organic acid is selected from a group selected from citric acid, nitrilo tri acetic acid or combination thereof.

The alkali is selected from a group consisting of sodium hydroxide, sodium bicarbonate, sodium carbonate, potassium bicarbonate, potassium carbonate and potassium hydroxide or combination thereof.

The pseudoboehmite alumina is in a concentration in a range of 25 and 65 (vol/vol)% and phosphoric acid is in a concentration in a range of 5 and 15 (vol/vol)% in the solution A.

The colloidal silica is in a concentration in a range of 5 and 50 % and boric acid is in a concentration in a range of 0.1 and 10 (wt/vol) % in solution B.

The mixture of the solution A and the solution B is washed, dried and calcined at a temperature in a range of 450°C to 550°C for 3 to 5 hours to obtain the bottom cracking catalyst.

The present disclosure is further illustrated by reference to the following examples which is for illustrative purpose only and does not limit the scope of the disclosure in any way. These examples are not intended to be inclusive of all aspects of the subject matter disclosed herein, but rather to illustrate representative features, methods, compositions, and results. These examples are not intended to exclude equivalents and variations of the present disclosure, which are apparent to one skilled in the art.

### EXAMPLES:

### Example 1: Process for synthesis of bottoms cracking additive for fluid catalytic cracking unit.

### (a) Synthesis of /Meso Y zeolite

For the synthesis of Meso Y zeolite, 20 g of Y zeolite with SiO₂/Al₂O₃ of 5.2 is treated with citric acid at 60°C for 2 hours, followed by NaOH treatment at 40 °C.

### (b) Synthesis of Acidity enhanced Pseudoboehmite alumina (AEA)

18.0 g of Pseudoboehmite alumina (LOI - 27.5 % at 550 °C) was added to 75 mL of H₂O and 3.5 g of H₃PO₄ (85%) was added to Meso Y Zeolite. The mixture was stirred for 2 hours at 30 °C.

(c) 5.0 g of Ludox HS-40 (d) and stirred for 30 minutes. 5.8 g of H₃BO₃ dissolved in 20 mL of hot water was added to (d) and stirred for 1 hour. Finally, contents of (c) were added to the above mixture at 30 °C for 2 hours. The mixture was washed, dried and finally calcined at 550 °C for 4 hours to obtain final additive.

### Example 2: Physico-chemical properties of prepared additives

The physico-chemical properties of prepared additives are illustrated in Table 1.

**Table 1**

| **Sr. No.** | **Properties** | **BCA composition with Meso Y zeolite and B2O5 (present invention)** | **BCA composition with out MesoY zeolite and B2O5** | **Reference FCC additive (E cat)** |
|---|---|---|---|---|
| 1. | Total Surface area | 220 m²/g | 154 m2/g | 148 m2/g |
| 2. | External Surface area | 190 m²/g | 140 m2/g | 140 m2/g |
| 3. | Micro surface area | 30 m²/g | 14 m2/g | 8 m2/g |
| 4. | Pore volume | 0.45 cc | 0.40 cc | 0.38 cc |
| 6. | Acidity-(NH₃ uptake) | 540 micromol/g | 424 micromol/g | 389 micromol/g |

### Example 3: Pre-treatment of Bottoms cracking additive by Hydrothermal Deactivation Method

In order to maintain the desired level of conversion (feed to useful products such as dry gas (DG), liquefied petroleum gas (LPG), gasoline, heavy naphtha, light cycle naphtha, clarified oil and coke) in the FCC unit, an equilibrium catalyst is continuously removed from the regenerator and added with a fresh catalyst. Accurate prediction of catalyst deactivation rate which happens in the commercial units under real operating conditions in the laboratory is essential not only to the catalyst management strategy but also to the evaluation process and selection of catalysts. Catalyst deactivation of lab developed prepared additives were carried out at 815 °C for 5 hours with 80 % steaming recipe in Metal Cyclic Deactivation unit before performance evaluation.

### Example 4: Feedstock Characterization

The feed used in the present study is vacuum gas oil (VGO) and its properties are listed in below Table 2.

**Table 2: Feed Properties**

| **Properties** | **VGO** |
|---|---|
| Density at 15°C, gm/cc | 0.9171 |
| Sulphur, wt% | 1.969 |
| CCR, wt% | 0.6 |
| Pour point, °C | 45 |
| Kinematic viscosity @100°C, cSt | 7.742 |

| ASTM-7169 Distillation, wt% | |
|---|---|
| IBP | 283 |
| 5 | 345 |
| 10 | 365 |
| 30 | 404 |
| 50 | 429 |
| 70 | 457 |
| 90 | 506 |
| 95 | 529 |

| **SARA, wt%** | |
|---|---|
| Saturates | 57.1 |
| Aromatics | 33.3 |
| Resin | 9.4 |
| Asphaltenes | 0.2 |

### Example 5: Performance evaluation results

Advanced Cracking Evaluation (ACE) - Micro-Activity test (MAT) unit (with online RGA) was used to measure the microactivity of steam deactivated additives. The results shows the significance of Meso zeolite and B₂O₅ combination. The detailed results are given in Table 3.

**Table 3: Product yields**

| **Catalyst Name** | **BCA composition with Meso Y zeolite and B2O5 (present invention)** | **BCA composition without Meso Y zeolite and B₂O₅** |
|---|---|---|
| Reactor Temp (°C) | 529 | 529 |
| Catalyst/Oil | 6.0 | 6.0 |
| Conversion (wt%) | 69.1 | 70.0 |
| Yields (wt %) | | |
| Coke Yield (wt%) | 4.54 | 4.56 |
| Dry Gas | 2.65 | 2.74 |
| LPG | 18.22 | 18.85 |
| Gasoline (wt%) | 43.71 | 43.87 |
| LCO (wt%) | 18.26 | 18.22 |
| Bottoms (wt%) | 12.61 | 11.76 |

### ADVANTAGE:

The advantage of the present invention includes reducing bottoms yield and increasing the yields of gasoline and light cycle oil.

## Claims

1. A process for preparing bottoms cracking catalyst for fluid catalytic cracking unit, wherein the process comprising:
• treating Y zeolite with an organic acid, followed by treating with an alkali to obtain Meso Y zeolite;
• preparing an aqueous solution of pseudoboehmite alumina and phosphororic acid and mixing with Meso Y zeolite to obtain a solution A;
• mixing a dispersion of colloidal silica and aqueous solution of boric acid to obtain a solution B;
• mixing the solution A and the solution B to obtain the bottom cracking catalyst.

2. The process as claimed in claim 1, wherein the Y zeolite comprises SiO₂/Al₂O₃ in ratio in a range of 4.5 to 5.5.

3. The process as claimed in claim 1 or 2, wherein the organic acid is selected from a group selected from citric acid and Nitrilo tri acetic acid or combination thereof.

4. The process as claimed in any preceding claim, wherein the alkali is selected from a group consisting of sodium hydroxide, sodium bicarbonate, sodium carbonate, potassium bicarbonate, potassium carbonate and potassium hydroxide or combination thereof.

5. The process as claimed in in any preceding claim, wherein pseudoboehmite alumina is in a concentration in a range of 25 to 65 (vol/vol)% and phosphoric acid is in a concentration in a range of 5 to 15 (vol/vol)% in the solution A.

6. The process as claimed in in any preceding claim, wherein colloidal silica is in a concentration in a range of 5 to 50 % and boric acid is in a concentration in a range of 0.1 to 10 (wt/vol) % in solution B.

7. The process as claimed in in any preceding claim, wherein the mixture of the solution A and the solution B is washed, dried and calcined at a temperature in a range of 450°C to 550°C for 3 to 5 hours to obtain the bottom cracking catalyst.
